# EUROPEAN PATENT SPECIFICATION

(11) **EP 2 995 439 B1**
(45) Date of publication and mention of the grant of the patent: **12.07.2017**
(21) Application number: 15181494.4
(22) Date of filing: 19.08.2015
(51) Int. Cl.: B29C 47/02, B29C 47/10, B29C 47/28, B29C 47/08, B29D 30/38

(54) **APPARATUS AND METHOD FOR PRODUCING LAMINATED FABRIC PLY STRIPS**
VORRICHTUNG UND VERFAHREN ZUR HERSTELLUNG VON STREIFEN AUS LAMINIERTEN STOFFLAGEN
APPAREIL ET PROCÉDÉ DE PRODUCTION DE BANDES DE TISSU STRATIFIÉES

(30) Priority: 28.08.2014 US 201462043232 P
(43) Date of publication of application: 16.03.2016
(73) Proprietor: The Goodyear Tire & Rubber Company, Akron, Ohio 44316 (US)
(72) Inventor: DYRLUND, Christopher David, Canton, OH 44705 (US); BURG, Gary Robert, Massillon, OH 44646 (US); CHEN, Hongbing, Broadview Heights, OH 44147 (US)
(74) Representative: Kutsch, Bernd

(56) References cited:
- EP-A1- 0 503 541
- EP-A1- 2 253 450
- JP-A- 2005 246 736
- US-A- 4 150 929
- US-A- 4 274 821

## Description

### Field of the Invention

This invention relates to pneumatic tires, and more particularly, the invention relates to ply constructions for tires.

### Background of the invention

Modern passenger tires are typically constructed utilizing two or more layers of ply or a fabric woven from reinforcement filaments or cords. Such ply materials are typically made from an apparatus having a guide insert having passages through which the cabled reinforcement cords pass. If one of the reinforcement cords breaks, the apparatus typically needs to be disassembled, the guide insert removed, and then individually rethreading of the cords in the insert needs to occur. This procedure results in a significant loss on productivity. Thus, it is desired to have an improved apparatus that allows replacement of one or more cords without the disruption of the remaining cords, and in a short period of time in order to minimize loss of production.

JP-A-2005-246736 describes a cross-head die assembly for use with an extruder in accordance with the preamble of claim 1.

Another die for extruding reinforced fabric is described in US-A-4,274,821.

EP-A-0 503 541 describes an extrusion head for producing tread plies for vehicle tires.

US-A-4,150,929 describes a ribbon cable extrusion apparatus.

EP-A-2 253 450 describes an extrusion device with adjustable die ends.

### Summary of the Invention

The invention relates to a cross-head die assembly for use with an extruder in accordance with claim 1, and to a method of making a ply in accordance with claim 11.

Dependent claims refer to preferred embodiments of the invention.

The invention provides a method of making ply comprising: extruding a plurality of cords through a cross-head extruder, wherein the cords are aligned in a die; and forming a base layer of rubber wherein the cords are impregnated within the base layer.

### Definitions

"Cord" means one of the reinforcement strands, including fibers, which are used to reinforce the plies.

"Ply" means a cord-reinforced layer of elastomer-coated, radially deployed or otherwise parallel reinforcement cords.

### Brief Description of Drawings

In the accompanying drawings:
Figure 1 is a perspective view of a cross-head die assembly shown with gear pump assembly in phantom;
Figure 2 is a cross-sectional view of the cross-head die assembly of Figure 1 in the direction 2-2;

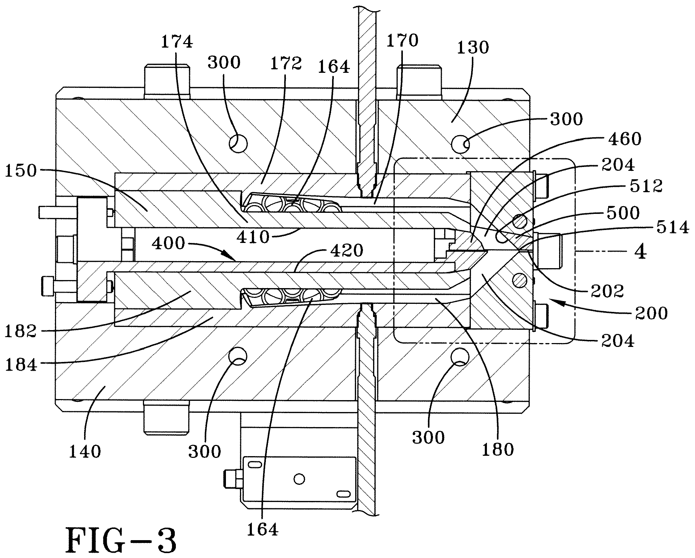

Figure 3 is a cross-sectional view of the cross head die assembly of Figure 1 in the direction 3-3;
Figure 4 is a cross-sectional view of the cross head die assembly of Figure 1 in the direction 4-4;
Figure 5 is a perspective, partially exploded view of the cross head die assembly of Figure 1 showing the upper flow channel upper insert.
Figure 6 is a perspective, partially exploded view of the cross head die assembly of Figure 1 showing the upper flow channel lower insert.
Figure 7 is a perspective view of the cross head die assembly of Figure 1 showing the lower flow channel upper insert.
Figure 8 is a rear view of the cross head die assembly of figure 1 showing the cord cassette removed.
Figure 9 is a cross-sectional view of the cross head die assembly of Figure 8 in the direction 9-9.
Figure 10 is a perspective view of the cross head die assembly of Figure 1 showing the cords path through the cord cassette, and the cord guide and upper and lower dies.
Figures 11 A, 11B, and 11C are close up views of the respective circled portions shown in Figure 10.
Figure 12 is a perspective view of the nose of the cassette, and Figure 12A is a close-up view of the nose lip and cord outlet.
Figure 13A is a rear perspective view of the die and insert assembly, unassembled.
Figure 13B is a rear perspective view of the die and insert assembly, assembled.
Figure 14 is a side view of the cross-head die assembly shown with the block removed for accessing the filter.
Figure 15 is a cross-sectional view of the cross-head die assembly of Fig 2 in the direction 15-15.
Figure 16 is a close-up view of the lip of the nose of the cassette, showing the cord alignment grooves.

### Description of the Preferred Embodiment(s)

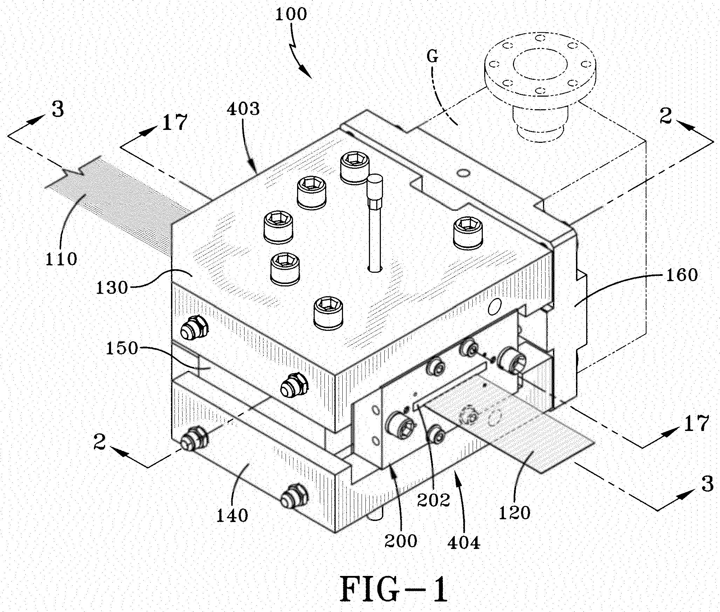

Figure 1 illustrates a cross-head die assembly 100 connected to the gear pump or extruder assembly G shown in phantom. The assembly G supplies the elastomeric material to the cross-head die assembly. As shown in Figure 1, a plurality of parallel reinforcement cords 110 enter the cross-head die assembly 100 and are encased with elastomeric material to form a strip of reinforced ply material 120 which is output from the outlet passageway 202 of the die 200. The strip has a typical width of 80 mm with a typical thickness of 1.2 mm.

The cross-head die assembly 100 has an upper support block 130, a lower support block 140 and an interior section 150. An inlet section 160 is located on one end of the cross-head die assembly and is connected to the upper support block 130, the lower support block 140 and the interior section 150. The upper support block 130, lower support block 140 and the interior section are all removably connected to the assembly 100.

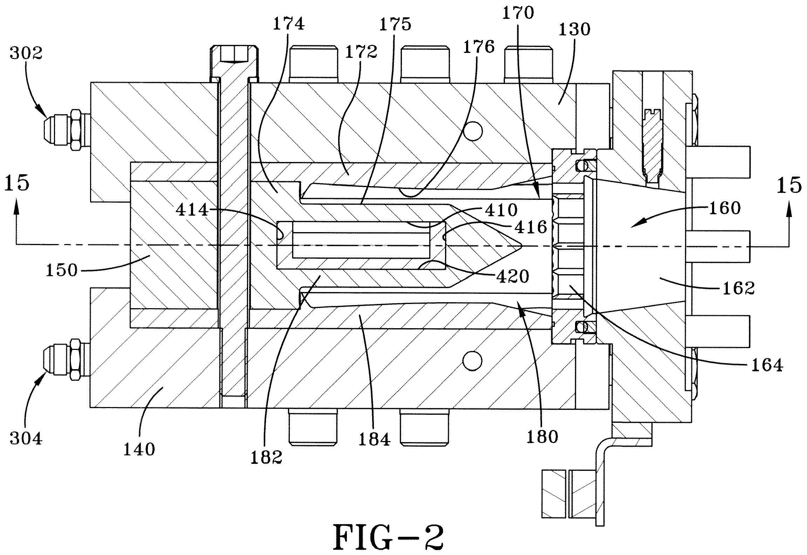

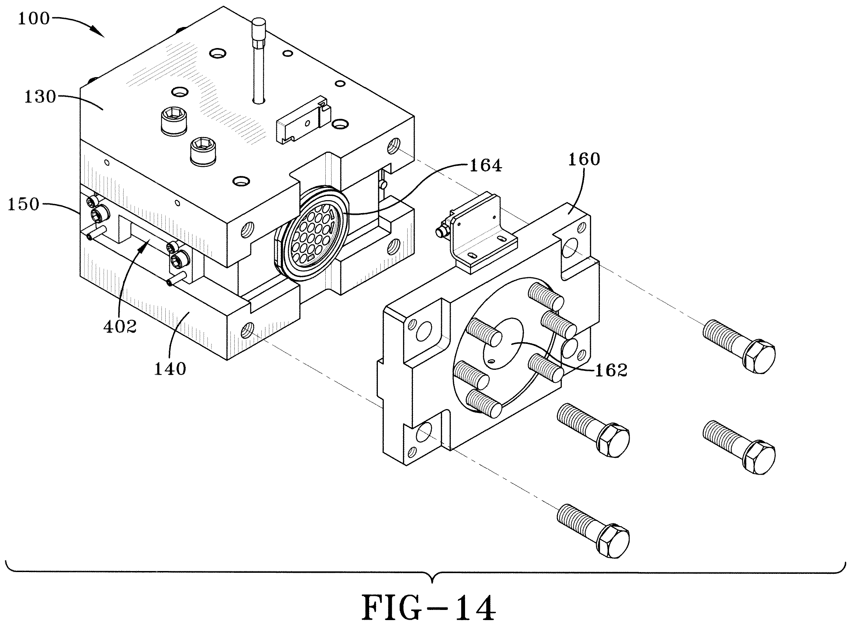

A cross-section of the cross-head die assembly 100 is shown in Figure 2. The inlet section 160 has an inlet channel 162 for receiving elastomer material from an extruder (not shown) or extruder-gear pump assembly G. The inlet channel 162 communicates elastomer flow to a screen filter 164. As shown in Figure 14, the inlet section 160 is easily removed from the assembly 100 without the need to completely disassemble the die assembly in order to replace or access the screen filter 164. The screen filter 164 is easily removed and replaced.

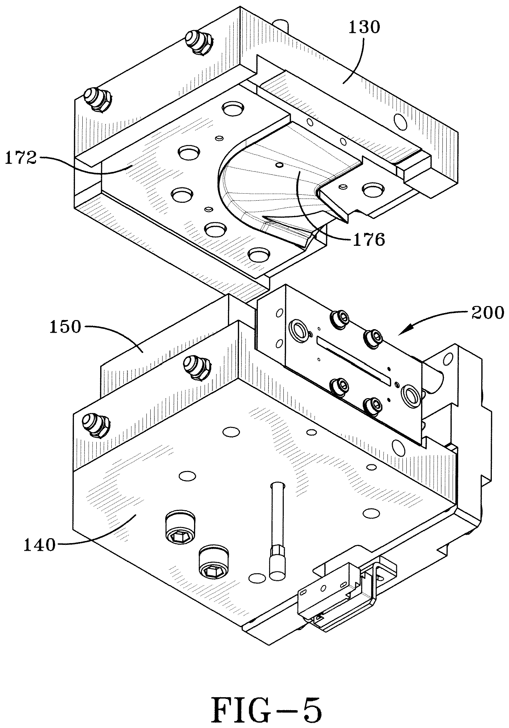

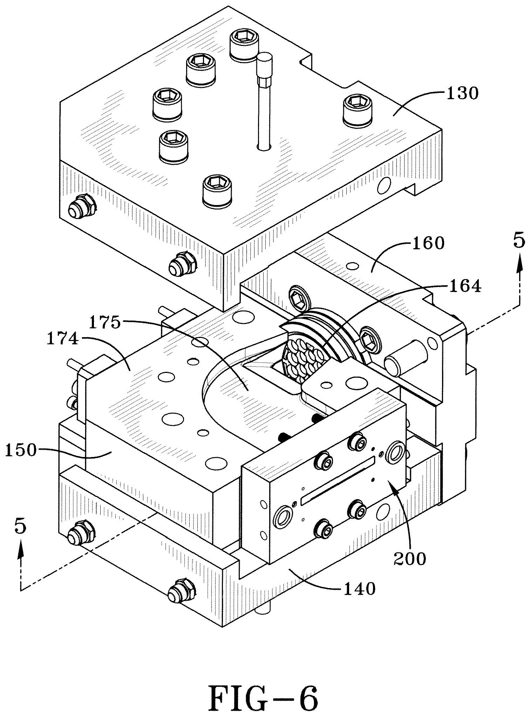

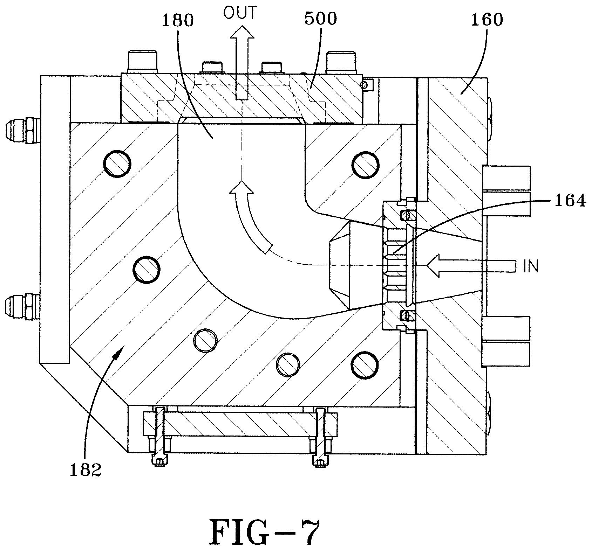

As shown in Figure 2, elastomer flow from the extruder enters the assembly 100 and is separated into an upper flow channel 170 and a lower flow channel 180. The upper flow channel 170 is formed from a removable upper insert plate 172 and a removable lower insert plate 174. The removable upper insert plate 172 (Figure 5) has a 90 degree flow path 176 that cooperates with the 90 degree flow path (Figure 6) of the lower insert plate 174 to form the upper flow channel 170. Likewise, the lower flow channel 180 is formed between a removable upper insert plate 182 (Figure 7) and a lower insert plate 184 with 90 degree flow paths that cooperate to form the lower flow channel 180. Preferably, the lower insert plate 174 and the upper insert plate 182 have a tapered outlet end 173, 183. The elastomer flow from the upper and lower flow channel 170, 180 enters the profile die 200. The profile die 200 is removably mounted to the cross-head assembly 100. As shown in Figure 1, the profile die 200 has an outlet hole 202 for exit of the ply strip from the assembly 100.

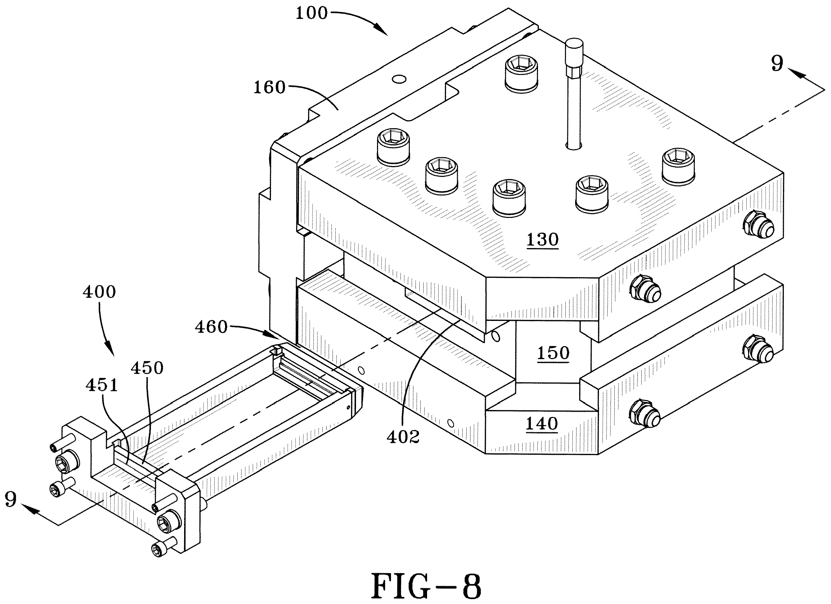

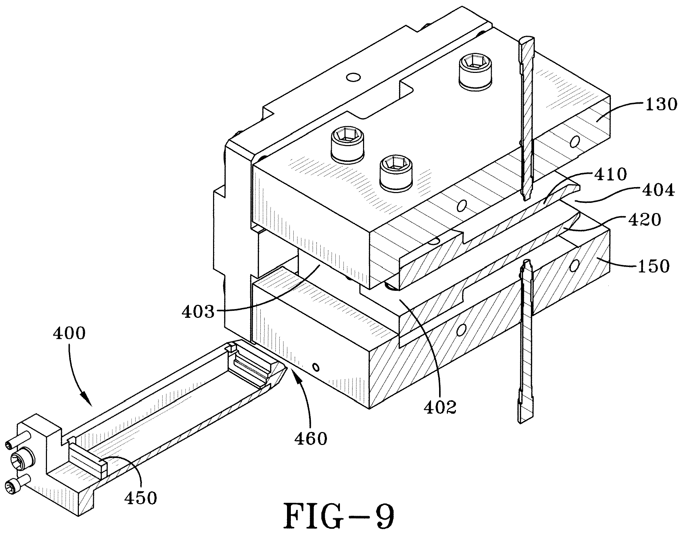

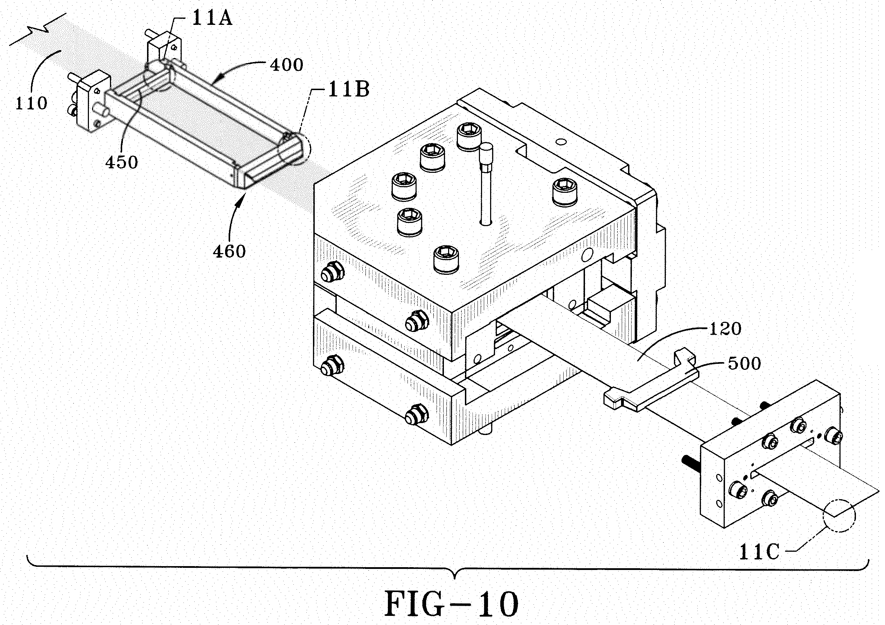

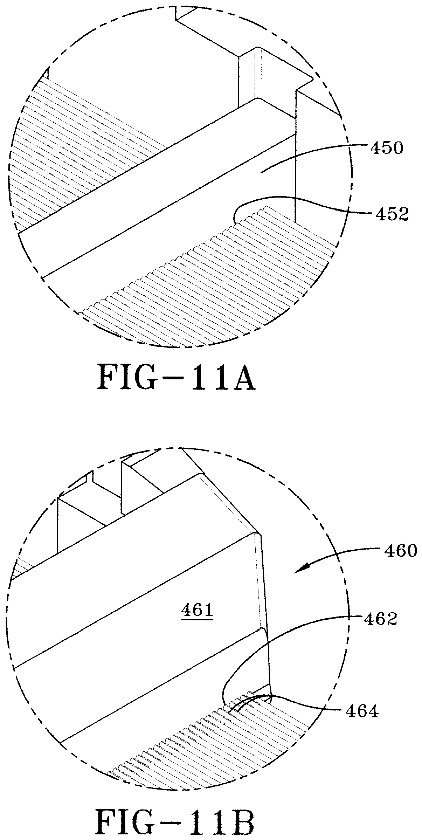

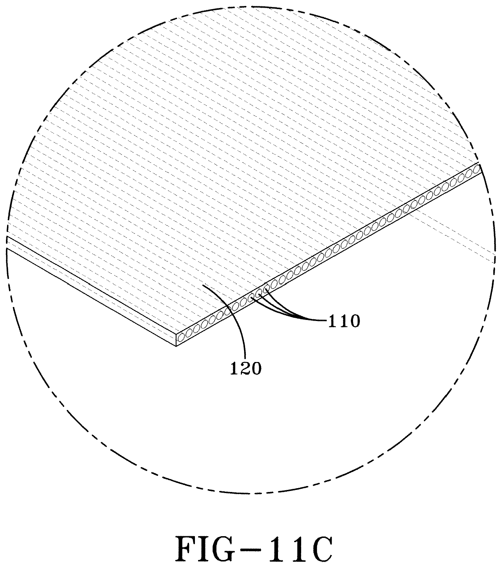

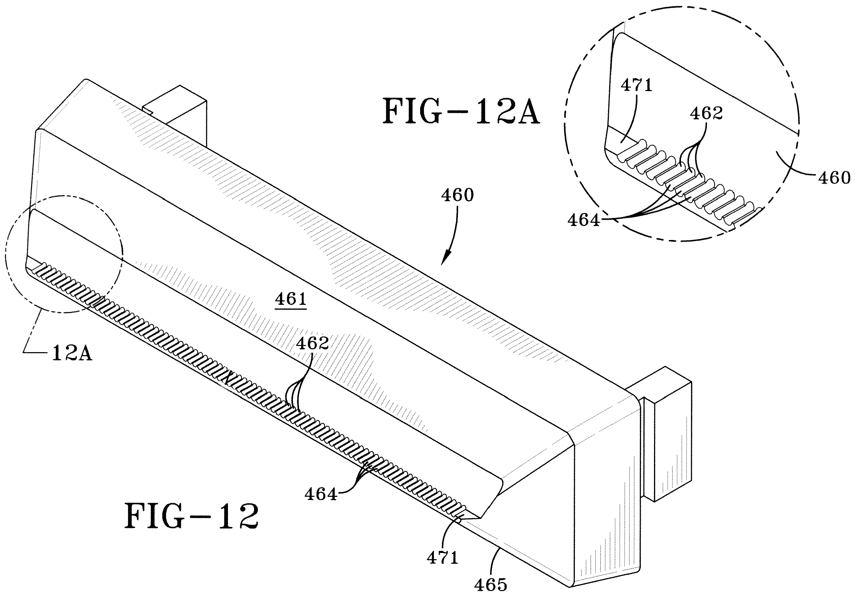

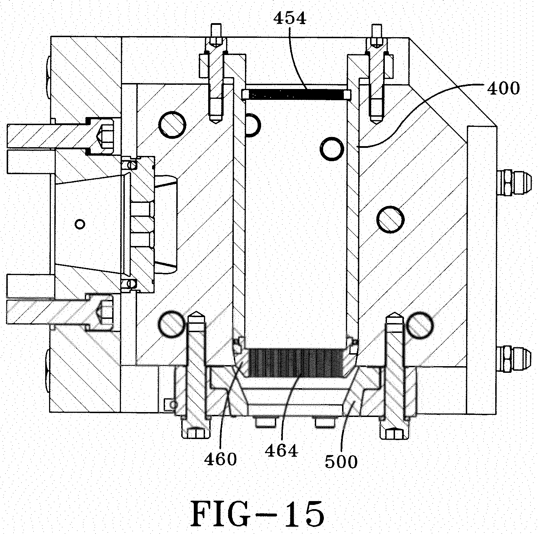

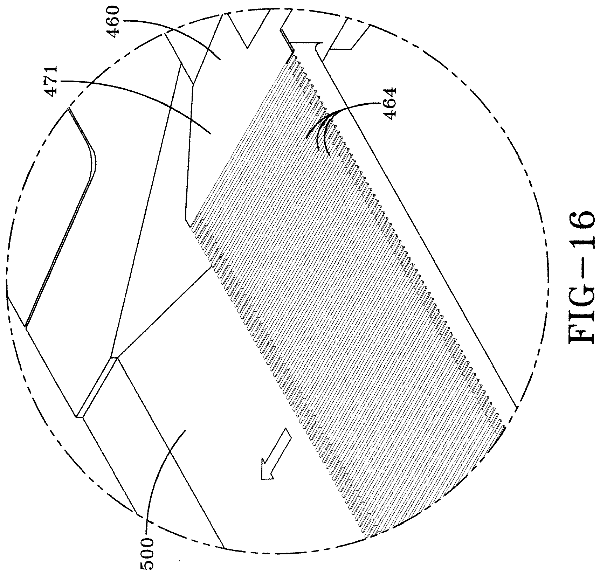

As shown in Figure 8, the cross-head die assembly 100 has a removable cassette 400 for feeding the reinforcement cords 110 into the cross-head die assembly in parallel alignment. The cassette 400 is received in a rectangular shaped slot 402 located in interior section 150. As shown in Figure 9, the rectangular slot 402 extends from the inlet side 403 of the cross-head die assembly to the outlet side 404. The slot 402 is separated and isolated from the elastomer flow in the upper and lower flow channels 170, 180. The slot has upper and lower walls 410, 420 and first and second sidewalls 414, 416 which isolates the cassette and therefore allows the cassette to be removed from the assembly without disruption of the elastomer flow. Figure 10 illustrates the cords 110 in the cassette 400. The cords 110 are threaded in the slot 451 of cord guide 450 as shown in Figure 11 A, wherein the slot has inner surfaces 452 having alignment edges 454 (Figure 15) which maintain the spacing of the cords. The front end of the cassette has a nose 460 as shown in Figures 8, 12 and 12a. The nose 460 is detachable from the cassette. The nose 460 has a row of closely spaced outlet holes 462, wherein each hole 462 receives a cord. The outlet holes 462 are positioned adjacent a lip 471 which protrudes axially from the outer surface of the nose. The lip 471 is formed by the removal or relief of a portion of the upper surface of the nose. A plurality of alignment groove 464 are positioned on the lip 471 adjacent each outlet hole 462. The alignment groove 464 extends through the hole as shown in Figures 12, 13 and 16. The alignment grooves 464 together with the outlet holes 462 maintain the proper separation, spacing and alignment of each individual cord so that the reinforcement ply strip is formed with parallel and properly spaced cords as shown in Figure 11C. Further, the individual holes for each cord allow for the easy replacement of a single broken cord without disrupting the remaining cords.

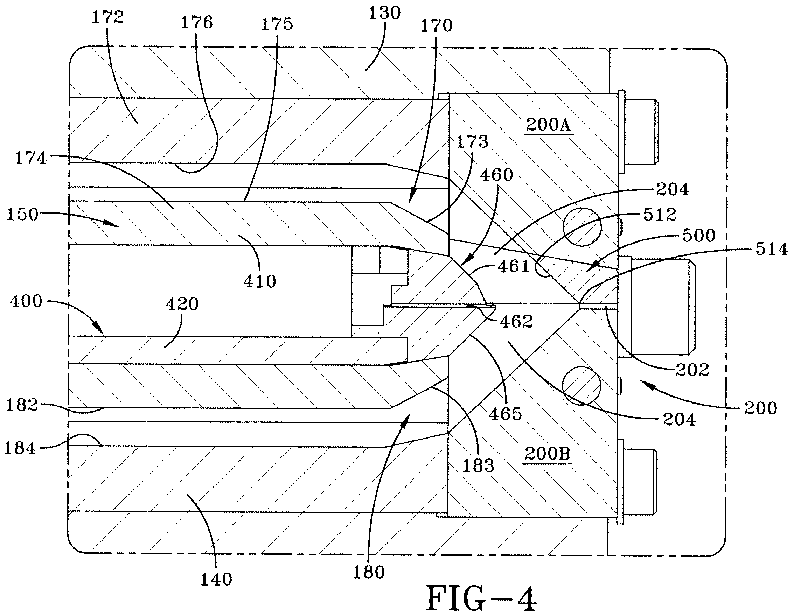

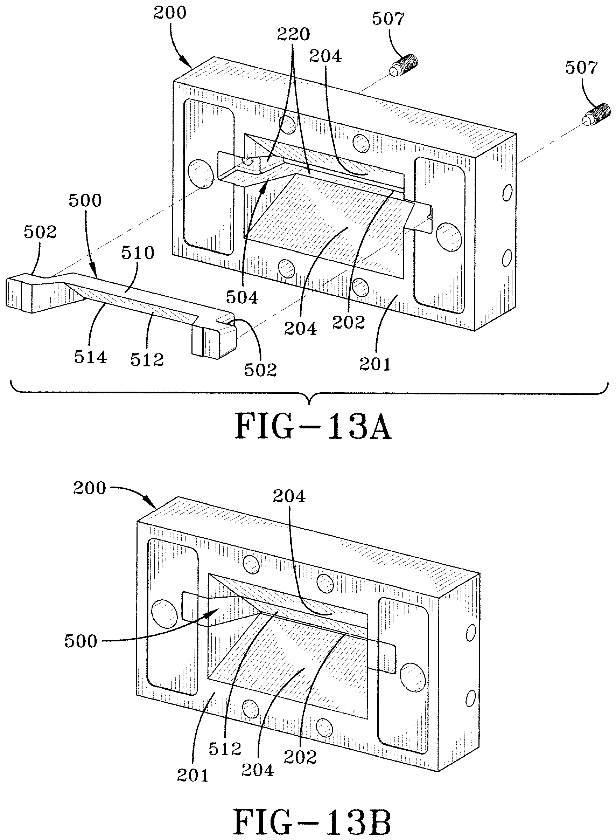

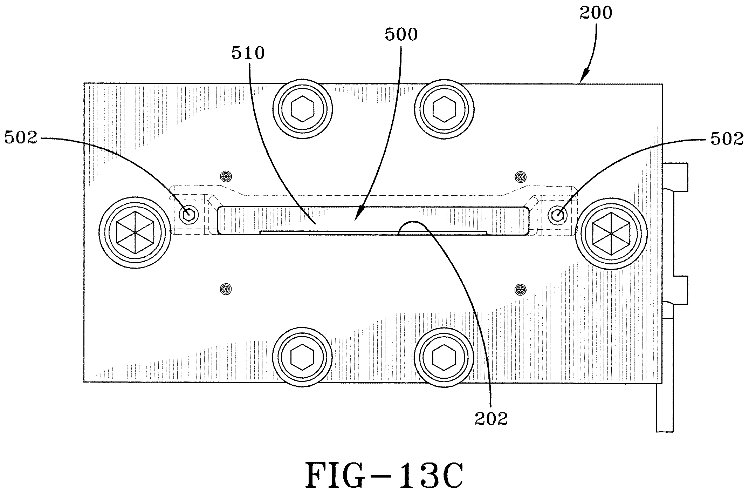

The nose 460 of the cassette is positioned adjacent the die assembly 200. As shown in Figures 4 and 13, the rear face 201 of the die 200 has angled passageways 204 for communicating elastomer through the die outlet hole 202. The die assembly 200 further includes an insert 500 which is removably mounted in a slot 504 the die assembly 200. The insert has flanged ends 502 which are positioned in the slot ends. Fasteners 507 removable secure the insert 500 to the rear face 201 of the die assembly 200. The insert 500 has a front sealing edge 510 that is positioned in the insert slot 504. The insert 500 functions to seal the die edges to prevent leakage, particularly near the edges of the die. As pressure increases in the die assembly, the insert is pushed further into the die, resulting in the insert sealing edge 510 forming a seal with the die edges 220 located around the outlet hole 202. The insert has a lower face 512 that forms part of the angled passageway 204 when the insert is snapped into the die. The lower portion 514 of the lower face 512 forms the upper portion of the die outlet hole 202.

The nose 460 of the cassette has an upper and lower outer contoured surface 461, 465. The upper contoured surface 461 of the nose is positioned adjacent the angled passageway 204. As the elastomer flows from the upper and lower channel, it is squeezed through the angled passageway 204 and along the outer contoured surface 461, 465 of the nose 460. The elastomer flows down the upper outer surface of the nose, and then meets the cords at the lip 471 and encapsulates the reinforcement cords 110 along the lip 471. The alignment grooves 464 of the lip 471 maintain stability by retaining the cord spacing and alignment while the elastomer flows onto the cords. The flow from the bottom channel flows along the bottom surface of the nose and meets the cord after the upper portion of the cords have already been coated with rubber. The elastomer and cords then pass through the angled passageway 204 and then through the die outlet hole 202.

The die 200 is removable to allow for easier cord threading. If a cord breaks or the cords need to be changed out, the cassette can be easily removed from the assembly. The die 200 and insert 500 can also be removed for cord change. If a cord is broken, it can be rethreaded into the guide 450 and the outlet hole 462 of the cassette. A broken cord can be replaced without rethreading the remaining cords. When the cassette is removed, the rubber or elastomer remains isolated in the flow channels. A complete change out of the cord package may occur within 5 minutes. The flow channel inserts may also be changed out.

As shown in Figure 2, the cross-head die assembly 100 may further comprise one or more cooling/heating channels 300 with a coolant inlet 302 and coolant exit 304.

In summary, the improved cross-head die assembly provides for individually fed cord strands captured with through hole guide, with no sharp edges to break the cords. The invention allows for easy change out of a cord package in minutes while the elastomer remains isolated in the flow channels. A broken cord can be replaced without the need to rethread all of the remaining cords. The invention further provides for an integrated screen filter and replaceable flow channel inserts which allow the flow balance of the system to be modified.

## Claims

1. A cross-head die assembly for use with an extruder, the cross-head die assembly (100) comprising: an inlet section (160) having an inlet for receiving flow from the extruder; an upper support block (130) removably connected to a first side of an interior section (150); and a lower support block (140) removably connected to a second side of the interior section (150); a first flow passage being located between the upper support block (130) and the interior section (150) and being in fluid communication with the inlet section (160); a second flow passage being located between the interior section (160) and the lower support block (140) and being in fluid communication with the inlet section (160); wherein the cross-head die assembly (100) further comprises a removably mounted die (200) located at an outlet end of the cross-head die assembly (100); wherein the first and the second flow passage are in fluid communication with an inlet of the die (200); and wherein the interior section (150) further comprises an interior slot (402) which extends from a first side of the cross-head die assembly (100) to the inlet of the die (200); and a removable cassette (400) positioned in the interior slot (402); **characterized in that** the interior slot (402) has an outlet end and a nose (460) of the cassette (400) seals the outlet end of the interior slot (402) from flow, so that the interior slot (402) is isolated from the flow, and wherein the nose (460) is detachable from the removable cassette (400).

2. The cross-head die assembly of claim 1, wherein the upper support block (130) has a removable flow insert.

3. The cross-head die assembly of claim 1 or 2 wherein the lower support block (140) has a removable flow insert.

4. The cross-head die assembly of at least one of the previous claims wherein the first side of the interior section (150) has a removable flow insert.

5. The cross-head die assembly of at least one of the previous claims wherein the second side of the interior section (150) has a removable flow insert.

6. The cross-head die assembly of at least one of the previous claims wherein the cassette (400) has a plurality of holes (202) for receiving a ply cord.

7. The cross-head die assembly of claim 6 wherein each hole (202) has an alignment groove (464) which extends though said hole (202).

8. The cross-head die assembly of at least one of the previous claims wherein the interior slot (402) has upper and lower sidewalls and lateral sidewalls.

9. The cross-head die assembly of at least one of the previous claims wherein the die (200) has a removable insert (500).

10. The cross-head die assembly of claim 9 wherein the removable insert (500) has a sealing edge (510) positioned against the die outlet hole.

11. A method of making ply, the method comprising: extruding a plurality of cords through a cross-head die assembly (100) in accordance with claim 1 wherein the cords are aligned in the die (200) of the a cross-head die assembly (100); and forming a base layer of rubber wherein the cords are impregnated within the base layer.

## Patentansprüche

1. Querspritzkopfanordnung zur Anwendung bei einem Extruder, wobei die Querspritzkopfanordnung (100) umfasst: einen Einlassabschnitt (160) mit einem Einlass zur Aufnahme des Stroms von dem Extruder; einen entfernbar mit einer Seite eines inneren Abschnitts (150) verbundenen oberen Stützblock (130); und einen entfernbar mit einer zweiten Seite des inneren Abschnitts (150) verbundenen unteren Stützblock (140); einen ersten Strömungskanal, der sich zwischen dem oberen Stützblock (130) und dem inneren Abschnitt (150) befindet und in Fluidkommunikation mit dem Einlassabschnitt (160) ist; einen zweiten Strömungskanal, der sich zwischen dem inneren Abschnitt (160) und dem unteren Stützblock (140) befindet und in Fluidkommunikation mit dem Einlassabschnitt (160) ist; wobei die Querspritzkopfanordnung (100) weiter eine entfernbar montierte Düse (200) umfasst, die sich an einem Auslassende der Querspritzkopfanordnung (100) befindet; wobei der erste und der zweite Strömungskanal in Fluidkommunikation mit einem Einlass der Düse (200) sind; und wobei der innere Abschnitt (150) weiter einen inneren Schlitz (402) umfasst, der sich von einer ersten Seite der Querspritzkopfanordnung (100) bis zum Einlass der Düse (200) erstreckt; und eine in dem inneren Schlitz (402) angeordnete entfernbare Kassette (400); **dadurch gekennzeichnet, dass** der innere Schlitz (402) ein Auslassende aufweist und eine Nase (460) der Kassette (400) das Auslassende des inneren Schlitzes (402) von dem Strom abschließt, sodass der innere Schlitz (402) von dem Strom isoliert ist, und wobei die Nase (460) von der entfernbaren Kassette (400) abnehmbar ist.

2. Querspritzkopfanordnung nach Anspruch 1, wobei der obere Stützblock (130) einen entfernbaren Strömungseinsatz aufweist.

3. Querspritzkopfanordnung nach Anspruch 1 oder 2, wobei der untere Stützblock (140) einen entfernbaren Strömungseinsatz aufweist.

4. Querspritzkopfanordnung nach mindestens einem der vorhergehenden Ansprüche, wobei die erste Seite des inneren Abschnitts (150) einen entfernbaren Strömungseinsatz aufweist.

5. Querspritzkopfanordnung nach mindestens einem der vorhergehenden Ansprüche, wobei die zweite Seite des inneren Abschnitts (150) einen entfernbaren Strömungseinsatz aufweist.

6. Querspritzkopfanordnung nach mindestens einem der vorhergehenden Ansprüche, wobei die Kassette (400) eine Vielzahl von Löchern (202) zur Aufnahme eines Lagenkords aufweist.

7. Querspritzkopfanordnung nach Anspruch 6, wobei jedes Loch (202) eine sich durch dieses Loch (202) erstreckende Ausrichtnut (464) aufweist.

8. Querspritzkopfanordnung nach mindestens einem der vorhergehenden Ansprüche, wobei der innere Schlitz (402) eine obere und eine untere Seitenwand und laterale Seitenwände aufweist.

9. Querspritzkopfanordnung nach mindestens einem der vorhergehenden Ansprüche, wobei die Düse (200) einen entfernbaren Einsatz (500) aufweist.

10. Querspritzkopfanordnung nach Anspruch 9, wobei der entfernbare Einsatz (500) einen gegen die Düsenauslassöffnung angeordneten Dichtungsrand (510) aufweist.

11. Verfahren zur Lagenherstellung, wobei das Verfahren umfasst: Extrudieren einer Vielzahl von Korden durch eine Querspritzkopfanordnung (100) gemäß Anspruch 1, wobei die Korde in der Düse (200) der Querspritzkopfanordnung (100) ausgerichtet sind; und Bilden einer Basisschicht aus Kautschuk, wobei die Korde in der Basisschicht imprägniert werden.

## Revendications

1. Assemblage de filière à tête d'équerre à utiliser avec une extrudeuse, l'assemblage de filière à tête d'équerre (100) comprenant : un tronçon d'entrée (160) possédant une entrée pour la réception d'un courant émanant de l'extrudeuse ; un bloc de support supérieur (130) relié en mobilité à un premier côté de tronçon interne (150) ; et un bloc de support inférieur (130) relié en mobilité à un second côté du tronçon interne (150) ; un premier passage d'écoulement étant disposé entre le bloc de support supérieur (130) et le tronçon interne (150) et étant mis en communication par fluide avec le tronçon d'entrée (160) ; un second passage d'écoulement étant disposé entre le tronçon interne (160) et le bloc de support inférieur (140) et étant mis en communication par fluide avec le tronçon d'entrée (160) ; dans lequel l'assemblage de filière à tête d'équerre (100) comprend en outre une filière (200) montée de manière amovible, située à une extrémité de sortie de l'assemblage de filière à tête d'équerre (100) ; dans lequel le premier et le second passage d'écoulement sont mis en communication par fluide avec une entrée de la filière (200) ; et dans lequel le tronçon interne (150) comprend en outre une fente interne (402) qui s'étend à partir d'un premier côté de l'assemblage de filière à tête d'équerre (100) jusqu'à l'entrée de la filière (200) ; et une cassette amovible (400) disposée dans la fente interne (402) ; **caractérisé en ce que** la fente interne (402) possède une extrémité de sortie, et un nez (460) de la cassette (400) ferme de manière étanche l'extrémité de sortie de la fente interne (402) par rapport à l'écoulement, d'une manière telle que la fente interne (402) est isolée par rapport à l'écoulement, et dans lequel le nez (460) peut être détaché de la cassette amovible (400).

2. Assemblage de filière à tête d'équerre selon la revendication 1, dans lequel le bloc de support supérieur (130) possède un insert d'écoulement amovible.

3. Assemblage de filière à tête d'équerre selon la revendication 1 ou 2, dans lequel le bloc de support inférieur (140) possède un insert d'écoulement amovible.

4. Assemblage de filière à tête d'équerre selon au moins une des revendications précédentes, dans lequel le premier côté du tronçon interne (150) possède un insert d'écoulement amovible.

5. Assemblage de filière à tête d'équerre selon au moins une des revendications précédentes, dans lequel le second côté du tronçon interne (150) possède un insert d'écoulement amovible.

6. Assemblage de filière à tête d'équerre selon au moins une des revendications précédentes, dans lequel la cassette (400) possède plusieurs trous (202) pour la réception d'un câblé de nappe.

7. Assemblage de filière à tête d'équerre selon la revendication 6, dans lequel chaque trou (202) possède une rainure d'alignement (464) qui s'étend à travers ledit trou (202).

8. Assemblage de filière à tête d'équerre selon au moins une des revendications précédentes, dans lequel la fente interne (402) possèdent des parois supérieure et inférieure et des parois latérales.

9. Assemblage de filière à tête d'équerre selon au moins une des revendications précédentes, dans lequel la fente interne (200) possède un insert amovible (500).

10. Assemblage de filière à tête d'équerre selon la revendication 9, dans lequel l'insert amovible (500) possède un bord d'étanchéité (510) disposé contre le trou de sortie de la filière.

11. Procédé de confection d'une nappe, le procédé comprenant le fait de : extruder plusieurs câblés à travers un assemblage de filière à tête d'équerre (100) selon la revendication 1, les câblés étant alignés dans la filière (200) de l'assemblage de filière à tête d'équerre (100) ; et former une couche de base de caoutchouc dans laquelle les câblés sont imprégnés au sein de la couche de base.
